# EUROPÄISCHE PATENTSCHRIFT

(11) **EP 2 676 053 B1**
(45) Veröffentlichungstag und Bekanntmachung des Hinweises auf die Patenterteilung: **16.03.2016**
(21) Anmeldenummer: 12712550.8
(22) Anmeldetag: 20.01.2012
(51) Int. Cl.: F16J 15/34, B25B 27/00

(54) **MONTAGEWERKZEUG FÜR GLEITRINGDICHTUNGEN**
MOUNTING TOOL FOR MECHANICAL SEALS
OUTIL DE MONTAGE POUR JOINTS MÉCANIQUES

(30) Priorität: 17.02.2011 DE 102011011476
(43) Veröffentlichungstag der Anmeldung: 25.12.2013
(73) Patentinhaber: Federal-Mogul Burscheid GmbH, 51399 Burscheid (DE)
(72) Erfinder: DENGLER, Andreas, 86316 Friedberg (DE)
(74) Vertreter: Döpp, Ludger
(86) Internationale Anmeldenummer: PCT/DE2012/000049
(87) Internationale Veröffentlichungsnummer: WO 2012/110015

(56) Entgegenhaltungen:
- DE-A1- 2 729 928
- DE-A1- 3 725 887
- DE-A1- 19 955 859
- JP-B- 50 008 538

## Beschreibung

Die Erfindung betrifft ein Montagewerkzeug zum Einsetzen eines mit einem elastischen Dichtkörper zusammenwirkenden Gleit- oder Gegenrings, einer Gleitringdichtung, insbesondere einer Laufwerkdichtung, in ein zugehöriges Gehäuseteil.

Wesentlich bei der Montage von Laufwerkdichtungen ist, dass die Einpresskraft unmittelbar auf den elastischen Dichtkörper und nicht den Gleitririg aufgebracht werden muss. Insbesondere für große Dichtungen wird dies bisher mit sehr schweren und teuren Stahlwerkzeugen realisiert, wodurch einerseits die Montage und andererseits der Werkzeugtransport extrem aufwändig sind.

Der US 7,370,865 B2 ist ein Montagewerkzeug für mit elastischen Dichtkörpern zusammenwirkenden Gleit- und Gegenringen einer Laufwerkdichtung zu entnehmen. Selbiges wird durch ein etwa scheibenförmig ausgebildetes Bauteil gebildet, das mit einem in axialer Richtung umlaufend verlaufenden Ansatz versehen ist, der zum Zwecke des Eindrückens des Dichtkörpers in ein Gehäuseteil außerhalb des Gleit- oder Gegenrings am elastischen Dichtkörper angreift. Ist der Dichtkörper innerhalb des Gehäuseteils positioniert, kommt ein am Bauteil gegebener Anschlag an einer Gegenfläche des Gehäuseteils zur Anlage. Wie bereits eingangs angedeutet, ist dieser Lösungsansatz als unpraktisch anzusehen.

Die JP-50008538 B offenbart ein Montagewerkzeug für O-Ringe, bestehend aus zwei winkelförmig ausgebildeten Hälften, wobei der eine Schenkel einer jeden Hälfte mit federnden Zungen versehen ist. Im Bereich des anderen Schenkels befindet sich ein Arretierungsanschlag zur Festlegung an einem der Bauteile für den O-Ring. Winkelartig ausgebildete Anschlagelemente die mit einem Gewinde versehen sind, wirken über entsprechende Gewindebohrungen, die in den Werkzeughälften vorgesehen sind, mit dem Montagewerkzeug zusammen.

In der DE 199 55 859 A1 wird eine Gleitringdichtung, insbesondere eine Laufwerkdichtung beschrieben, die aus einem winkelförmigen Gleitring und einem elastischen O-Ring besteht. Mittels eines geeigneten Werkzeugs wird der Gleitring samt elastischem Rollkörper axial über einen, am aufnehmenden Bauteil vorgesehenen Wulst, gedrückt.

Die DE 37 25 887 A1 offenbart eine Gleitringdichtung, zumindest beinhaltend einen winkelförmigen Gleit- und/oder Gegenring, in Verbindung mit einem elastischen O-Ring. Zwischen dem Radialschenkel des Gleit- und/oder Gegenrings und dem O-Ring erstreckt sich eine Sekundärdichtung.

Schließlich offenbart die DE 27 29 928 A1 eine Zentrifugalpumpe und einen Montageblock sowie Werkzeuge für den Zusammenbau einer derartigen Zentrifugalpumpe.

Der Erfindung liegt die Aufgabe zugrunde, ein Montagewerkzeug zum Einsetzen eines mit einem elastischen Dichtkörper zusammenwirkenden Gleit- oder Gegenrings in ein zugehöriges Gehäuseteil bereitzustellen, das einfach baut und eine vereinfachte Montage des jeweiligen Gleit- oder Gegenrings innerhalb eines zugehörigen Gehäuseteils ermöglicht. Das Möntagewerkzeug soll nicht nur bei der Erstmontage, sondern auch zu Reparaturzwecken an unterschiedlichen Örtlichkeiten einsetzbar sein.

Diese Aufgabe wird mit den Merkmalen des ersten Patentanspruchs gelöst.

Vorteilhafte Weiterbildungen des Erfindungsgegenstandes sind den Unteransprüchen zu entnehmen.

Abweichend zum Stand der Technik wird nun ein aus wenigen und vor allen Dingen leichten Bauteilen gebildetes Montagewerkzeug bereitgestellt, das im Wesentlichen an jedem beliebigen Ort eingesetzt werden kann.

Die Spannelemente bestehen vorteilhafterweise aus Kunststoff und bauen daher vom Gewicht her leicht. Die als Kreissegmente ausgebildeten Spannelemente werden beispielsweise mechanisch mittels Klemmschrauben am Gleit- oder Gegenring fixiert, wobei die Kraft vom Gleit- oder Gegenring dann direkt über den Montage-O-Ring auf den elastischen Dichtkörper übertragen werden kann.

Zur Kraftaufbringung bieten sich verschiedene Lösungen an: Zum einen kann ein Hilfsmittel, z.B. eine Druckrolle oder ein Stempel, zum Einsatz gelangen; zum anderen kann die Kraftkomponente auch durch eine oder mehrere Bedienpersonen manuell aufgebracht werden.

Von besonderem Vorteil ist, dass, unter Einsatz der erfindungsgemäßen Spannelemente in Wirkverbindung mit dem zugehörigen Montage-O-Ring, auch relativ große Gleitringdichtungen, insbesondere Laufwerkdichtungen kostengünstig innerhalb zugehöriger Gehäuseteile positioniert werden können.

Das erfindungsgemäße Montagewerkzeug ist leicht und kann problemlos ohne Einsatz eines Krans bedient werden. Der Transport kann einfach in einem Koffer erfolgen, so dass ein Monteur selbigen auch zu einem beliebigen Einsatzort im Flugzeug mitnehmen kann.

Die exakte Montage des elastischen Dichtkörpers ist dann abgeschlossen, wenn ein am jeweiligen Spannelement vorgesehener Anschlag an einer Gegenfläche des Gehäuseteils zur Anlage kommt.

Ist der elastische Dichtkörper innerhalb des Gehäuseteils exakt positioniert, werden die Spannelemente gelöst und der Montage-O-Ring, der, einem weiteren Gedanken der Erfindung gemäß, mit mindestens einer bandartig ausgebildeten Lasche versehen ist, über den Gleit- bzw. Gegenring gezogen.

Der Erfindungsgegenstand ist anhand eines Ausführungsbeispiels in der Zeichnung dargestellt und wird wie folgt beschrieben. Es zeigen:
- Figur 1: Prinzipskizze des erfindungsgemäßen Montagewerkzeugs;
- Figur 2: Teildarstellung des Montagewerkzeugs gemäß Figur 1 in der Position vor dem Einpressen des Dichtkörpers;
- Figur 3: Schnitt durch das Montagewerkzeug gemäß Figur 1 in der Position nach dem Einpressen des Dichtkörpers;
- Figur 4: Teildarstellung durch die fertig montierte Dichtung vor der Entfernung des Montage-O-Rings;
- Figur 5: Schnitt durch die fertig montierte Dichtung.

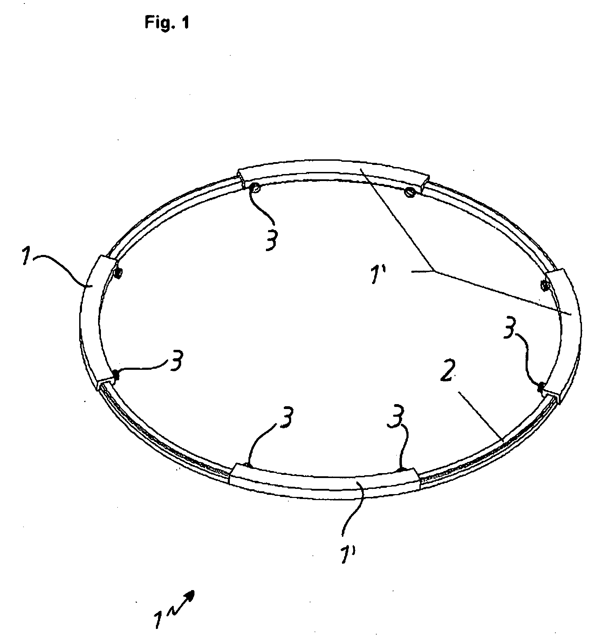

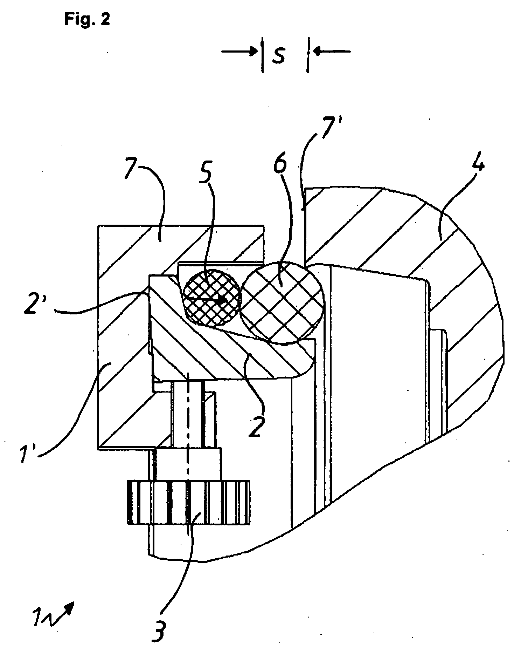

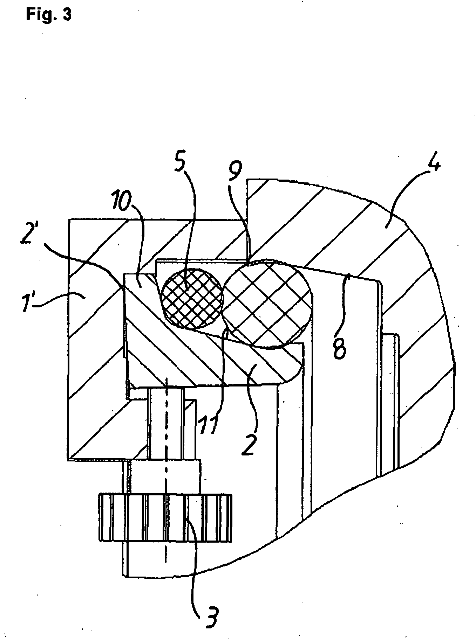

Figur 1 zeigt ein in diesem Beispiel aus vier Kreissegmenten bestehendes Montagewerkzeug 1 zur Montage eines Gleitrings 2, der in den Figuren 2 und 3 besser erkennbar ist. Die das Montagewerkzeug 1 bildenden einzelnen Spannelemente 1' wurden aus Kunststoff hergestellt. Das jeweilige, eine bestimmte Umfangslänge aufweisende Spannelement 1' hat einen etwa U-förmigen Querschnitt und wird auf die die Dichtfläche bildende Seite des Gleitrings 2 aufgesteckt und mittels Spannschrauben 3 relativ zum Gleitring 2 fixiert.

Figur 2 zeigt eine Teildarstellung des Montagewerkzeugs 1 gemäß Figur 1 in einer Position vor dem Einpressen eines Dichtkörpers. Erkennbar ist ein einzelnes Spannelement 1`, der Gleitring 2, ein Gehäuseteil 4, ein Montage-O-Ring 5 sowie ein elastischer Dichtkörper 6. Ebenfalls erkennbar ist eine Spannschraube 3, über welche der Gleitring 2 relativ zum Spannelement 1' fixiert wird. Wie bereits zu Figur 1 aufgeführt, weist ein jedes Spannelement 1' einen etwa U-förmigen Querschnitt auf und übergreift die Dichtfläche 2' des Gleitrings 2. Durch Reduzierung des in Figur 1 erkennbaren Spalts S zwischen dem Schenkel 7 und der Gehäuseteilgegenfläche 7' wird der elastische Dichtkörper 6 in seine Position innerhalb des Gehäuseteils 4 gedrückt.

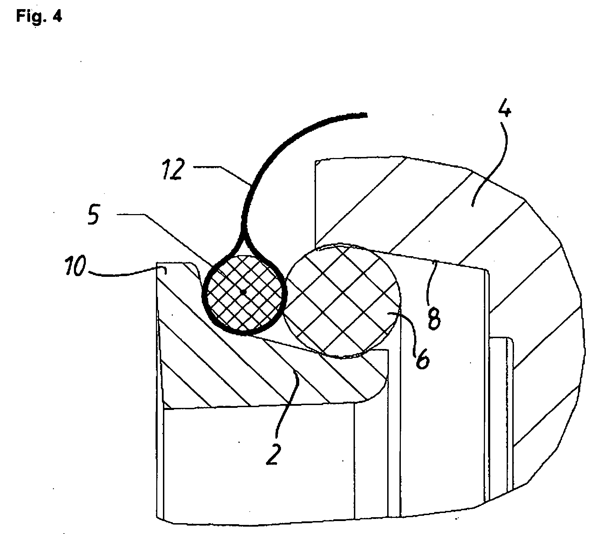

Figur 3 zeigt einen Zustand nach dem Einpressen des Dichtkörpers 6 in die Aufnahmebohrung 8 des Gehäuseteils 4. Erkennbar ist das im Querschnitt etwa U-förmig ausgebildete Spannelement 1', der Montage-O-Ring 5 und die Dichtfläche 2' des Gleitrings 2. Die Aufnahmebohrung 8 ist mit einer Hinterschneidung 9 versehen, hinter welche der elastische Dichtkörper 6 eingebracht werden muss, so dass er aus der Aufnahmebohrung 8 nicht mehr herausrutschen kann. Die Kraftaufbringung soll in diesem Beispiel durch Bedienpersonen erzeugt werden, die das jeweilige Spannelement 1' in Richtung des Gehäuseteils 4 drücken. Ist die in Figur 3 gezeigte Montagestellung des elastischen Dichtkörpers 6 innerhalb der Aufnahmebohrung 8 gegeben, wird das jeweilige Spannelement 1' durch Lösen der in Figur 1 erkennbaren Spannschrauben 3 vom Gleitring 2 entfernt und der Montage-O-Ring 5 über in Figur 4 dargestellte bandförmig ausgebildete Laschen über den Radialschenkel 10 des Gleitrings 2 aus dem Bereich seiner Dichtkörperaufnahme 11 gezogen.

Figur 4 zeigt als Teildarstellung die fertig montierte Dichtung, wobei der Montage-O-Ring 5 sich noch hinter dem Dichtkörper 6 befindet. Ferner dargestellt ist der Gleitring 2 sowie das Gehäuseteil 4. Der Montage-O-Ring 5 ist von einer bandartig ausgebildeten Lasche 12 umschlossen. In Umtangsrichtung des Montage-O-Rings 5 gesehen sind mehrere dieser Laschen 12 positioniert. Nach erfolgter Montage des Dichtkörpers 6 samt Gleitring 2 innerhalb der Aufnahmebohrung 8 des Gehäuseteils 4 wird der Montage-O-Ring 5 durch Ziehen an den Laschen 12 über den Radialschenkel 10 des Gleitrings 2 aus den Bereich des Gleitrings 2 entfernt.

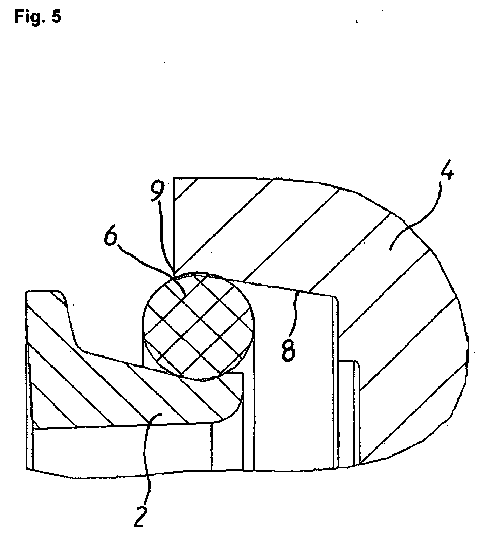

Figur 5 zeigt einen Schnitt durch den fertig montierten Gleitring 2, respektive dessen Dichtkörper 6. Erkennbar ist, dass der Dichtkörper 6 innerhalb der Aufnahmebohrung 8 des Gehäuseteils 4 so positioniert ist, dass er nicht mehr selbständig über die Hinterschneidung 9 rutschen kann.

## Patentansprüche

1. Montagewerkzeug zum Einsetzen eines mit einem elastischen Dichtkörper (6) zusammenwirkenden Gleit- (2) oder Gegenrings, einer Gleitringdichtung, insbesondere einer Laufwerkdichtung, in ein zugehöriges Gehäuseteil (4), beinhaltend mehrere als Kreissegmente ausgebildete Spannelemente (1') sowie einen Montage-O-Ring (5), wobei die Spannelemente (1') einerseits den Gleit- (2) oder Gegenring und andererseits den Dichtkörper (6) entsprechend ihrer Umfangslänge umgreifen können sowie auch den Montage-O-Ring (5), entsprechend seiner Umfangslänge, umgreifen und die Spannelemente (1') zur Montage des Dichtkörpers (6) innerhalb des Gehäuseteils (4) in Richtung desselben zustellbar sind.

2. Montagewerkzeug nach Anspruch 1, **dadurch gekennzeichnet, dass** ein jedes Spannelement (1') im Querschnitt etwa U-förmig ausgebildet ist und mit dem Gleit- (2) oder Gegenring in klemmender Weise in Wirkverbindung bringbar ist.

3. Montagewerkzeug nach Anspruch 1 oder 2, **dadurch gekennzeichnet, dass** die Zustellung der einzelnen Spannelemente (1') in Richtung des Gehäuseteils (4) mechanisch über ein Hilfsmittel, herbeiführbar ist.

4. Montagewerkzeug nach Anspruch 1 oder 2, **dadurch gekennzeichnet, dass** die Zustellung der einzelnen Spannelemente (1') in Richtung des Gehäuseteils (4) manuell durch mindestens eine Bedienperson herbeiführbar ist.

5. Montagewerkzeug nach einem der Ansprüche 1 bis 4, **dadurch gekennzeichnet, dass** der Montage-O-Ring (5) nach erfolgter Positionierung des Dichtkörpers (6) innerhalb des Gehäuseteils (4) vom Gleit- (2) bzw. Gegenring entfernbar ist.

6. Montagewerkzeug nach einem der Ansprüche 1 bis 5, **dadurch gekennzeichnet, dass** der Montage-O-Ring (5) mit einer etwa bandartig ausgebildeten Lasche (12) versehen ist.

7. Montagewerkzeug nach einem der Ansprüche 1 bis 6, **dadurch gekennzeichnet, dass** die Spannelemente (1') mit Anschlagflächen versehen sind, die nach erfolgter Positionierung des Dichtkörpers (6) innerhalb des Gehäuseteils (4) an einer Gegenfläche (7') des Gehäuseteils (4) zur Anlage kommen.

8. Montagewerkzeug nach einem der Ansprüche 1 bis 7, **dadurch gekennzeichnet, dass** die Spannelemente (1') aus Kunststoff bestehen.

## Claims

1. A mounting tool for inserting a slide ring (2) or counter ring of a mechanical seal, in particular a drive seal, into an associated housing part (4), wherein the slide ring or counter ring cooperates with an elastic sealing body (6), comprising several clamping elements (1') designed as segments of a circle as well as a mounting O-ring (5), wherein the clamping elements (1') can, according to the circumferential length thereof, encompass the slide ring (2) or counter ring, on the one hand, and the sealing body (6), on the other hand, and also encompass the mounting O-ring (5) according to the circumferential length thereof, and the clamping elements (1') can be displaced into the direction of the housing part (4) for mounting the sealing body (6) within the same one.

2. A mounting tool according to claim 1, **characterized in that** the cross section of each clamping element (1') is approximately U-shaped and each clamping element (1') can be brought into an operative connection with the slide ring (2) or counter ring in a clamping manner.

3. A mounting tool according to claim 1 or 2, **characterized in that** the displacement of the individual clamping elements (1') into the direction of the housing part (4) can be realized mechanically by means of an auxiliary means.

4. A mounting tool according to claim 1 or 2, **characterized in that** the displacement of the individual clamping elements (1') into the direction of the housing part (4) can be realized manually by at least one operator.

5. A mounting tool according to one of the claims 1 through 4, **characterized in that** after the sealing body (6) has been positioned inside the housing part (4), the mounting O-ring can be removed from the slide ring (2) or counter ring.

6. A mounting tool according to one of the claims 1 through 6, **characterized in that** the mounting O-ring is provided with an approximately strip-like flap (12).

7. A mounting tool according to one of the claims 1 through 6, **characterized in that** the clamping elements (1') are provided with stop surfaces, which come to rest against a counter surface (7') of the housing part (4) after the sealing body (6) has been positioned inside the housing part (4).

8. A mounting tool according to one of the claims 1 through 7, **characterized in that** the clamping elements (1') are made of plastic.

## Revendications

1. Outil de montage pour insérer une bague de glissement (2) ou une contre-bague d'une garniture mécanique, notamment d'une garniture de mécanisme de roulement, dans une partie de boîtier associée (4), la bague de glissement ou la contre-bague coopérant avec un corps d'étanchéité (6), comprenant plusieurs éléments de serrage (1') configurés comme segments circulaires ainsi qu'un anneau torique de montage (5), les éléments de serrage (1') étant capables, selon leur longueur circonférentielle, de tenir embrassé la bague de glissement (2) ou la contre-bague, d'une part, et le corps d'étanchéité (6), d'autre part, et embrassant aussi l'anneau torique de montage (5) selon la longueur circonférentielle de celui-ci, et les éléments de serrage (1') étant déplaçables dans la direction de la partie de boîtier (4) pour monter le corps d'étanchéité (6) à l'intérieur de celle-ci.

2. Outil de montage selon la revendication 1, **caractérisé en ce que** la section transversale de chaque élément de serrage (1') est en forme approximative de U et chaque élément de serrage (1') peut être mis en liaison active avec la bague de glissement (2) ou la contre-bague par serrage.

3. Outil de montage selon la revendication 1 ou la revendication 2, **caractérisé en ce que** le déplacement des éléments de serrage individuels (1') dans la direction de la partie de boîtier (4) peut être réalisé mécaniquement à l'aide d'un moyen auxiliaire.

4. Outil de montage selon la revendication 1 ou la revendication 2, **caractérisé en ce que** le déplacement des éléments de serrage individuels (1') dans la direction de la partie de boîtier (4) peut être réalisé manuellement par au moins un opérateur.

5. Outil de montage selon l'une des revendications 1 à 4, **caractérisé en ce que** l'anneau torique de montage (5) peut être enlevé de la bague de glissement (2) ou de la contre-bague dès que le corps d'étanchéité (6) ait été positionné à l'intérieur de la partie de boîtier (4).

6. Outil de montage selon l'une des revendications 1 à 5, **caractérisé en ce que** l'anneau torique de montage (5) est muni d'une languette (12) sous forme approximative de bande.

7. Outil de montage selon l'une des revendications 1 à 6, **caractérisé en ce que** les éléments de serrage (1') sont munis de surfaces de butée, qui viennent en appui sur une contre-surface (7') de la partie de boîtier (4) dès que le corps d'étanchéité (6) ait été positionné à l'intérieur de la partie de boîtier (4).

8. Outil de montage selon l'une des revendications 1 à 7, **caractérisé en ce que** les éléments de serrage (1') sont fabriqués en plastique.
